# EUROPEAN PATENT APPLICATION

(11) **EP 3 757 825 A1**
(43) Date of publication of application: **30.12.2020**
(21) Application number: 19182600.7
(22) Date of filing: 26.06.2019
(51) Int. Cl.: G06F 17/27, G06N 3/02

(54) **METHODS AND SYSTEMS FOR AUTOMATIC TEXT SEGMENTATION**

(71) Applicant: Siemens Healthcare GmbH, 91052 Erlangen (DE)
(72) Inventor: Baik, Kyunglok, 19104 Philadelphia, PA (US); Halid, Ziya Yerebakan, 19355 Malvern, PA (US); Shinagawa, Yoshihisa, 19335 Downingtown, PA (US)
(74) Representative: Patentanwälte Bals & Vogel

(57) **Abstract**

The invention disclosed herein relates to a computer-implemented method for identification of segments in a string of input characters using a computer system, a system (301) and computer readable medium (309) having instructions stored thereon which, when executed by a computer, cause the computer to perform the computer implemented method. The method comprises receiving a string of input characters by a processor (307) of the computer system (301), extracting a number of input characters left and right from a particular input character and determining a probability for the particular input character being an end character using at least one machine learning algorithm and splitting the string of input characters at a position of the particular input character into segments, if the probability determined by the at least one machine learning algorithm is greater than a predetermined threshold.

## Description

### Technical Field

The present invention relates to the automatic identification of segments in a textual document.

### Background

With the volume of textual information provided in unstandardized textual documents ever increasing, there is a need for effective and efficient methods of identifying characteristic portions in a text that are to be separated from other information in order to process in standardized data processing pipelines even considering the case of lack of punctuation.

For example, in the field of biomedical sciences there is often a need to convert unstandardized textual documents, such as medical text reports provided by medical doctors into standardized forms. For example, medical doctors often provide for medical reports that provide information without any separating punctuation. Particular segments or "facts" provided in these medical reports should be separated from other facts in order to generate a standardized form by using a text recognition algorithm, for example.

It is known to segment a text by using punctuation information provided in the text. However, since medical doctors are very often in a hurry, medical reports often show lacking punctuation, which results in a bad segmentation quality using known sentence tokenizers.

For example, a medical report may contain the following text: "Imaging performed at
Outside institution.
Lesion #1:
Side: right
Level: midgland"
If a known sentence tokenizer is used, it will produce two separate segments or "chunks" where a first chunk contains "Imaging performed at outside institution" and a second chunk contains "Lesion #1: Side: right Level: midgland." It is extremely difficult for a text analyzing algorithm that uses the chunks provided by the sentence tokenizer to decipher the fact that the second chunk consists of three facts, where "Lesion #1:" is the first, "Side: right" is the second and "Level: midgland" is the third.

It is therefore desirable to provide for accurate text segmentation a computer-implemented method that enables a reliable and/or precise conversion of a medical report in a standardized form.

According to a first aspect of the present invention, there is provided a computer-implemented method for identification of segments in a string of input characters using a computer system, the method comprising the following steps:
a) receiving a string of input characters by a processor of the computer system, by a receiving unit, for example and by using the processor, for every character of the string of input characters:
b) extract a number of input characters left from a particular input character, and
   extract a number of input characters right from the particular input character, by an extraction unit, for example,
c) determine a probability for the particular input character being an end character using at least one machine learning algorithm, wherein the input characters left from the particular input character and/or the input characters right from the particular input character are used as input for the machine learning algorithm, by a determination unit, for example,
d) split the string of input characters at a position of the particular input character into segments, if the probability determined by the at least one machine learning algorithm is greater than a predetermined threshold, by a splitting unit, for example,
e) repeat steps b) to d) for the remaining input characters,
f) generate an output comprising a segmentation on every position of the string of input characters, which caused a splitting of the string of input characters in step d), and present the output using an output unit, for example.

In the context of the present disclosure a string of characters may be defined as a number of characters. A string of characters may be retrieved from a scanning process to extract textual information from a textual document, such as an optical character recognition or "OCR" algorithm, for example.

In the context of the present disclosure an extraction of a number of characters may be defined as a process that copies the number of characters into a memory, such as a working memory of a computer system to make them available for further processing steps, such as a classification procedure using a machine learning algorithm.

In the context of the present disclosure a machine learning algorithm may be defined as a procedure that recognizes patterns in input data. In particular, a machine learning algorithm may be defined as a classifier that automatically associates a particular feature, such as a number of characters with a label, such as "text" or "end character", for example. A machine learning algorithm may use computational power of a processor to carry out classifications at a level of complexity, speed and precision that is beyond human capability.

In the context of the present disclosure an end character may be defined as a character that represents an end portion of a particular segment, which may represent a fact.

In the context of the present disclosure a segment in a string of characters may be defined as a number of characters that are to be separated from other characters of the string of characters. All characters of a segment may relate to a single fact, in particular a fact in a medical report. Thus, all characters of a segment may relate to a particular topic. A segment may comprise a number of segments. A segment may be a set of at least one character, wherein the at least one character may be "0" or any other value indicative of the fact that the segment is empty or, in other words, the segment does not contain information for any character included in a string of input characters.

In the context of the present disclosure a segmentation may be a process that splits a text or a number of characters into segments for example. A segmentation or a place where a segmentation is indicated may be associated with a command, such as "new line" command, which is used to segment text in a text processing algorithm.

Optionally, a first machine learning algorithm is used for the input characters extracted left from the particular input character, and a second machine learning algorithm is used for the input characters extracted right from the particular input character, and the output from the first and the second separate machine learning algorithms are concatenated into one prediction value indicative of a probability that the particular character of the string of input characters is an end character.

Optionally, the method further comprises:
g) carry out an automatic text analysis algorithm based on the segments determined by splitting the string of input characters based on the generated output.

Optionally, the method further comprises:
generating a document comprising the string of characters determined by the automatic text analysis algorithm, wherein the string of characters is segmented according to the prediction value, and displaying the generated document on a display unit.

Optionally, the automatic text analysis algorithm is used to generate a medical report with a standardized tokenization.

Optionally, the at least one machine learning algorithm is a pre-trained machine learning algorithm that has been trained using training data comprising a number of input characters and a number of ground truth labels, wherein each ground truth label is associated with a number of input characters, and each ground truth label indicates an association of the respective input characters with a given class representing a number indicative of a probability that the respective input characters are characters standing left or right from an end character.

Optionally, the at least one machine learning algorithm comprises at least one artificial neural network.

Optionally, the at least one artificial neural network is a long short-term memory artificial neural network.

Optionally, the characters of the string of characters are converted into at least one character embedding comprising a vector representing at least one of the characters in the multidimensional space.

Optionally, an output from the at least one machine learning algorithm is converted into a single dimension using a dense function.

Optionally, the method comprises obtaining the string of characters via a graphical user interface, wherein the graphical user interface comprises at least one symbol for carrying out a scan process for scanning handwritten information and to convert the handwritten information into the string of characters.

According to a second aspect of the present invention, there is provided a system comprising a processor, such as a graphic processor unit (GPU) and/or a central processor unit (CPU) and a memory, wherein the memory comprises a computer program comprising instructions, which when the program is executed by the processor, cause the processor to carry out the steps according to the above described method according to the first aspect of the invention.

Optionally, the system comprises a receiving unit configured for receiving a string of input characters in a step a), an extraction unit for extracting a number of input characters left from a particular input character, and for extracting a number of input characters right from the particular input character in a step b),a determination unit for determining a probability for the particular input character being an end character using at least one machine learning algorithm, wherein the input characters left from the particular input character and the input characters right from the particular input character are used as input for the machine learning algorithm in a step c), a splitting unit for splitting up the string of input characters into segments at a position of the particular input character if the probability determined by the at least one machine learning algorithm is higher than a predetermined threshold in a step d), wherein the system is configured to repeat steps a) to d) for the remaining input characters, and wherein the system further comprises an output unit for generating and/or presenting an output that is segmented on every position of the string of input characters that caused a splitting of the string of input characters in step d).

In the context of the present disclosure, segmented or segmenting a set of characters may be defined as splitting up a set of characters into at least two segments.

According to a third aspect of the present invention, there is provided a computer readable medium having instructions stored thereon which, when executed by a computer, cause the computer to perform the method according to the first aspect.

### Brief Description of the Drawings

- Figure 1: is a flow chart illustrating schematically a method according to an example;
- Figure 2: is another flow chart illustrating schematically the use of a machine learning algorithm according to an example;
- Figure 3: is a functional block diagram illustrating schematically a system according to an example; and
- Figure 4: is a drawing illustrating schematically the conversion of a string of characters into a text according to an example.

### Detailed Description

In the following description, various specific details are set forth such as examples of specific components, devices, methods, etc., in order to provide a thorough understanding of implementations of the present invention. While the present invention is susceptible to various modifications and alternative forms, specific embodiments thereof are shown by way of example in the drawings and will herein be described in detail. It should be understood that certain method steps are delineated as separate steps; however, these separately delineated steps should not be construed as necessarily order dependent in their performance.

Unless stated otherwise as apparent from the following discussion, it will be appreciated that terms such as "segmenting," "generating," "registering," "determining," "aligning," "positioning," "processing," "computing," "selecting," "estimating," "detecting," "tracking" or the like may refer to the actions and processes of a computer system, or similar electronic computing device, that manipulates and transforms data represented as physical, for example electronic, quantities within the computer system' s registers and memories into other data similarly represented as physical quantities within the computer system memories or registers or other such information storage, transmission or display devices. The method described herein may be implemented using computer software or a computer program conforming to a recognized standard, wherein sequences of instructions designed to implement the method can be compiled for execution on a variety of hardware platforms and for interface to a variety of operating systems.

The method according to the first aspect of the present invention in general relates to a computer-implemented method for identification of segments in a string of input characters using at least one machine learning algorithm. This may comprise that the at least one machine learning algorithm is used to classify an end portion, i.e. a portion of a first set of characters that separates the first set of characters or segment from a second set of characters or segment respectively.

The at least one machine learning algorithm according to the present method may be trained on a number of training data that have been annotated by human users to provide for a ground truth in order to optimize the at least one machine learning algorithm. Thus, the at least one machine learning algorithm may make use of so-called "transfer learning", which is to use at least a part of information gained by a first classifier that has been optimized using a first set of data for generating a second classifier that is optimized for classification of a second set of data. For this purpose, the second classifier may comprise information, such as one or more layers, for example, from the first classifier.

The method disclosed herein, in general, splits up a string of characters that comprises a plurality of characters in a segment left from a particular character and a segment right from a particular character. Further, the segment left from the particular character and the segment right from the particular character are used to analyze whether the particular character is an end character that marks an end of a segment in the string of characters, where the string of characters is to be split in order to create two or more segments that relate to only one fact, for example. In other words, the present method may be used to determine the probability of a particular character in a string of characters for being an end portion of a segment such as a phrase, for example. Such an end portion may be a punctuation or any other textual symbol. By using information from the characters in the segments left and right from a particular character, the context of the particular character may be analysed by the at least one machine learning algorithm to calculate the probability of the particular character being an end character.

A particular character may be chosen randomly from a particular string of characters or may be selected in an ascending or descending order from the characters in the string of characters.

A particular character may be marked as being an end character or not, based on a result from the at least one machine learning algorithm, which may determine a number being indicative of the probability for being an end character or not, based on the characters of the segments left and/or right from the particular character. If the number determined by the at least one machine learning algorithm is greater than a threshold of "0,5", for example, the respective character may be marked as being an end character.

By using an iterative approach, every character of a string of characters may be analysed for being an end character or not, using the present method. As soon as every character of a string of characters has been analysed for being an end character or not, the string of characters may be separated according to particular characters that have been marked as being an end portion.

As soon as a string of characters has been separated, i.e. split into segments, the resulting segments may be used to generate an output document using a text recognition algorithm, for example.

The method disclosed herein makes use of at least one machine learning algorithm, such as an artificial neural network, for example. The at least one machine learning algorithm may be used to identify an end character in a string of characters, the end character being indicative of where the string of characters is to be split into two segments, as it is known in common grammar using a semicolon or any other splitting marker, for example.

According to the method disclosed herein, a string of characters is received by a processor. Thus, the string of characters may be provided by another processor, which may be part of a computer network or may be retrieved from a memory, such as cloud server or a hard disk from the computer system comprising the processor, for example. The string of characters may be provided as text data, in particular as text data retrieved from a handwritten medical report by using a so-called optical character recognition or "OCR" algorithm.

The string of characters may comprise a plurality of characters, wherein each of the characters or a set of characters may be associated with a character embedding comprising a vector representing the character or the set of characters as such or in combination with other characters in a multidimensional space.

Various models may be employed for learning/generating character embeddings.

In some examples, the character embeddings of a textual document may be pre-trained. For example, the characters and the character embeddings for a particular textual document may be obtained from a database.

As used herein, character embeddings may be mappings of individual characters or a set of characters, which may be part of a fact or a segment of a textual document onto real-valued vectors representative thereof in a multidimensional vector space. Each vector may be a dense distributed representation of the character or the set of characters in the vector space. Character embeddings may be learned/generated to provide that characters or a set of characters that have a similar meaning have a similar representation in vector space.

As used herein, character embeddings may be learned using machine learning techniques. Character embeddings may be learned/generated for characters of a textual document. Character embeddings may be learned/generated using a training process applied on the textual document. The training process may be implemented by a deep learning network, for example based on a neural network. For example, the training may be implemented using a Recurrent Neural Network (RNN) architecture, in which an internal memory may be used to process arbitrary sequences of inputs. For example, the training may be implemented using a Long Short-Term Memory (LSTM) based Recurrent Neural Network (RNN) architecture, for example comprising one or more LSTM cells for remembering values over arbitrary time intervals, and/or for example comprising gated recurrent units (GRU). The training may be implemented using a convolutional neural network (CNN). Other suitable neural networks may be used.

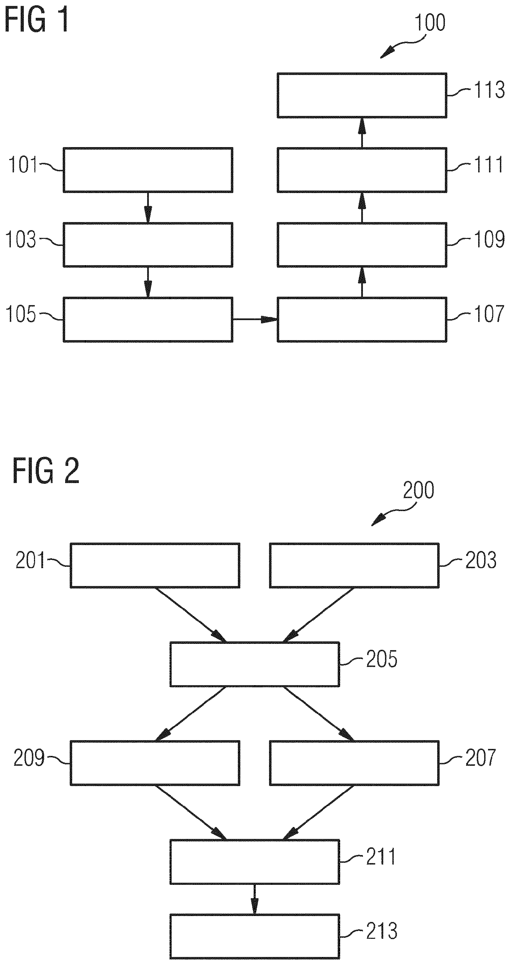

In some examples, as described in more detail below with reference to Figure 2, a first machine learning algorithm is used for the input characters extracted in a segment left from the particular input character and a second machine learning algorithm is used for the input characters extracted in a segment right from the particular input character, and the output from the first and the second separate machine learning algorithms are concatenated into one prediction value indicative of the probability that the particular character of the string of input characters is an end character determined by the at least one machine learning algorithm.

By using separate machine learning algorithms for characters left from a particular character and characters right from a particular character, the particular machine learning algorithms can be trained precisely for the characters to be analysed, which results in a very precise prediction whether the particular character is an end character or not.

In some examples, the present method further comprises a step g), which involves carrying out an automatic text analysis algorithm based on segments determined by splitting the string of input characters based on output generated by the present method. The output may be a document comprising information about particular characters being end characters.

By using an automatic text analysis algorithm, the output provided by the present method may be used to generate a text document, such as a medical report, that comprises text that is punctuated or formatted based on the output information.

In some examples, the characters of the string of characters are converted into at least one character embedding comprising a vector representing at least one of the characters in multidimensional space. By using character embeddings, a classification process may be carried out using the at least one machine learning algorithm. The character embeddings may be based on particular characters, such as a capital letter, or a set of characters, such as set of dots, for example.

Referring to Fig. 1, in broad overview, the method comprises the following steps 101 to 111, as shown in a first flow chart 100.

In a first step 101, the method comprises receiving a string of input characters. The string of input characters comprises a number of characters, which may be at least a part of a text, such as a medical report written by a medical doctor, which should be transferred into a standardized medical report using the present method.

The string of input characters is received by a processor of a computer system. Thus, the processor may read the string of input characters from a memory, such as a working memory of the computer system or receive the string of input characters via an interface, such as a cable or a wireless connection.

In some examples, the string of input characters is extracted from one or more pictures by the processor. Thus, the processor may carry out an optical character recognition algorithm to extract the information of the characters in the one or more pictures.

As soon as the processor received or extracted the string of characters, the method continues with step 103.

In a second step 103, the method comprises extracting a number of input characters, preferably all input characters, left from a particular input character, and extracting a number of input characters, preferably all input characters, right from the particular input character. The particular input character may be chosen randomly or may be selected in an ascending or descending order. Thus, the particular input character may be selected in an iterative approach, such that all characters of the string of input characters are used as the particular input character at least once.

In case the particular input character is the starting or first character of the string of input characters, the characters left from the input character may be labelled as "0".

In case the particular input character is the end or last character of the string of input characters, the characters right from the input character may be labelled as "0".

In a third step 105, the method comprises determining a probability for the particular input character being an end character using at least one machine learning algorithm, wherein the input characters left from the particular input character and/or the input characters right from the particular input character are used as input for the machine learning algorithm.

By using a machine learning algorithm, such as an artificial neural network, in particular a long short term memory artificial neural network or any other suitable classification algorithm, a probability value may be determined for a particular set of information, such as the input characters right from the particular input character and/or the input characters left from the particular input character.

In some examples, a probability value is determined using a logic implemented in the machine learning algorithm that has been determined using training data, such as medical reports that have been annotated by hand in order to provide for a ground truth in a training process for the machine learning algorithm.

In some examples, the at least one machine learning algorithm is a pre-trained machine learning algorithm that has been trained using training data comprising a number of input characters and a number of ground truth labels, wherein each ground truth label is associated with a number of input characters, and each ground truth label indicates an association of the respective input characters with a given class representing a number indicative of a probability that the respective input characters are characters standing left or right from an end character. This means, that the at least one machine learning algorithm comprises knowledge gained by in a training process that is used to determine a particular probability value for a particular input character that is indicative for the particular input character being an end character.

In a fourth step 107, the method comprises splitting the string of input characters at a position of the particular input character into segments if the probability determined by the at least one machine learning algorithm is greater than a predetermined threshold.

If the probability determined by the at least one machine learning algorithm is greater than a predetermined threshold, which may be "0,5", for example, the particular input character is marked or labelled as being an end character, which leads to a separation of the characters standing left from the particular input character from the characters standing right from the particular input character. This separation may indicate a "new line" command or any other separation command, such a semicolon or a colon, for example that may be used in a text analysis algorithm that processes the output provided by the present method.

In case the probability determined by the at least one machine learning algorithm is lower than a predetermined threshold, the particular input character is marked or labelled as a regular, normal or non-end character, which may lead to a concatenation of the particular input character with at least one character standing right from the particular input character, such that a separation at a position of the particular input character is avoided.

In a fifth step 109, the method comprises repeating steps 103 to 107 for the remaining input characters. Thus, the particular input character is shifted from a first character in the string of input characters to another character in the string of input characters. This process may continue in an iterative process until all characters of the string of input characters have been used as the particular input characters at least once. Thus, for every character in the string of input characters, it may be determined whether the input character is an end character or not.

In a sixth step 111, the method comprises generating an output comprising a segmentation on every position of the string of input characters, which caused a splitting of the string of input characters in step 107.

As soon as all end characters in a string of input characters have been identified using the present method, an output, such as a text document, may be generated.

In some examples, the method further comprises a seventh step 113, wherein an automatic text analysis algorithm is carried out based on the segments determined by splitting the string of input characters based on the generated output.

In some examples the output may be used as input for a parser or a text recognition algorithm to generate a formatted text document, such as a standardized medical report. In such a standardized medical report every segment determined by splitting the string of input characters may be provided in a separate line or a separate position in a corresponding text document. This means that every segment determined by splitting the string of input characters is used as a single entity independent from other segments.

In some examples. the present method may be implemented using the following pseudo-code:
for every input character of a string of input characters:
- Get left and right context of the character;
- Calculate probability of the character if it is an end character using at least one machine learning algorithm;
- Split the string of input characters if the probability is higher than a predetermined threshold;
- Continue on a remaining part of the string of input characters.

In Fig. 2, an exemplary second flow chart 200 for finding a prediction value using a first artificial neural network 207 and a second artificial neural network 209 according to an embodiment of the present method is shown.

A first input layer 201 receives a first set of characters which correspond to all characters of a string of characters that are located left from a particular character in the string of characters.

A second input layer 203 receives a second set of characters which correspond to all characters of the string of characters that are located right from the particular character in the string of characters.

The first input layer 201 transmits the first set of characters to an embedding layer 205 and the second input layer 203 transmits the second set of characters to the embedding layer 205.

The embedding layer 205 transfers the first set of characters into a first set of character embeddings, which represent the first set of characters in a multidimensional vector space.

The embedding layer 205 transfers the second set of characters into a second set of character embeddings, which represent the second set of characters in a multidimensional vector space.

The embedding layer 205 transmits the first set of character embeddings to the first artificial neural network 207 and the second set of character embeddings to the second artificial neural network 209.

The first artificial neural network 207 determines whether the first set of character embeddings corresponds to a set of characters standing left from an end character or not.

The second artificial neural network 209 determines whether the second set of character embeddings corresponds to a set of characters standing right from an end character or not.

The results from the first artificial neural network 207 and the second artificial neural network 209 are transmitted to a concatenating layer 211 that concatenates the output generated by the first artificial neural network 207 and the second artificial neural network 209 into a single array, which is output to a dense layer 213, which creates an output in a single dimensional space being indicative of whether a character standing between the first set of characters and the second set of characters is an end character or not.

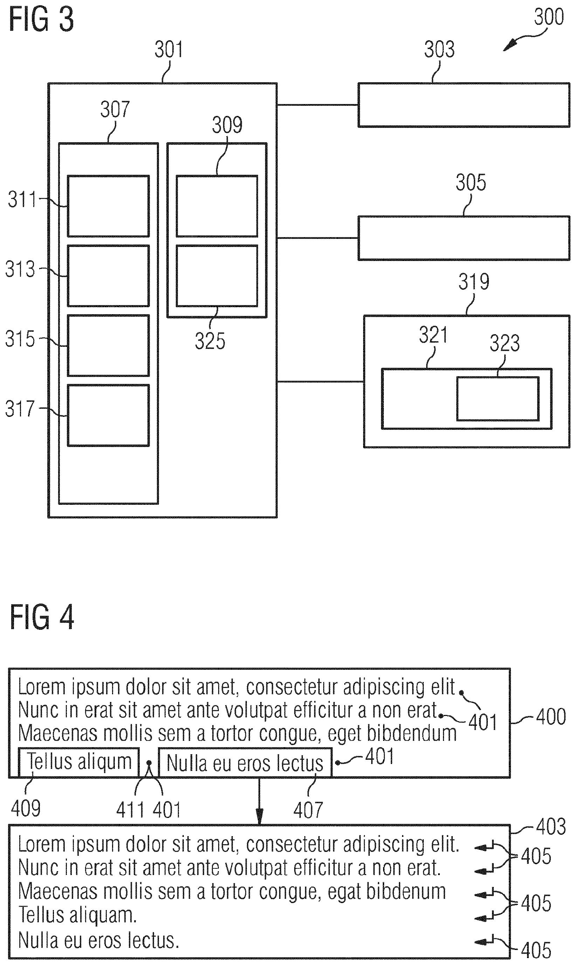

FIG. 3 is a block diagram illustrating an exemplary system 300. The system 300 includes a computer system 301 for implementing the method as described herein.

In some implementations, computer system 301 operates as a standalone device. In other implementations, computer system 301 may be connected, by using a network for example, to other machines, such as a scanner 303 or a cloud server 305.

In a networked deployment, computer system 301 may operate in the capacity of a server, which may be a thin-client server, such as Syngo® by Siemens Healthineers, for example, a client user machine in a server-client user network environment, or as a peer machine in a peer-to-peer or a distributed network environment.

In one implementation, computer system 301 includes a processor device or central processing unit (CPU) 307 coupled to one or more non-transitory computer-readable media 309, which may be a computer storage or memory device.

Computer system 301 may further include support circuits such as a cache, a power supply, dock circuits and a communications bus.

The present technology may be implemented in various forms of hardware, software, firmware, special purpose processors, or a combination thereof, either as part of the microinstruction code or as part of an application program or software product, or a combination thereof, which is executed via the operating system.

In one implementation, the techniques described herein are implemented as computer-readable program code tangibly embodied in one or more non-transitory computer-readable media 309. Non-transitory computer-readable media 309 may include random access memory (RAM), read-only memory (ROM), magnetic floppy disk, flash memory, and other types of memories, or a combination thereof. The computer-readable program code is executed by CPU 307 to process data provided by a data source.

In particular, the present techniques may be implemented by a receiving unit 311 configured for receiving a string of input characters in a step a), and by an extraction unit 313 for extracting a number of input characters left from a particular input character, and for extracting a number of input characters right from the particular input character in a step b), and by a determination unit 315 for determining a probability for the particular input character being an end character using at least one machine learning algorithm, wherein the input characters left from the particular input character and the input characters right from the particular input character are used as input for the machine learning algorithm in a step c), and by a splitting unit 317 for splitting up the string of input characters into segments at a position of the particular input character if the probability determined by the at least one machine learning algorithm is higher than a predetermined threshold in a step d).

The system 300 is configured to repeat steps a) to d) for the remaining input characters using CPU 307, for example.

The system 300 further comprises an output unit 319 for generating an output that is segmented on every position of the string of input characters that caused a splitting of the string of input characters in step d).

In some examples, the system may comprise a graphical user interface 321 for obtaining a string of characters, wherein the graphical user interface 321 comprises at least one control symbol 323 for carrying out a scan process for scanning hand written information and to convert the handwritten information into the string of characters. The graphical user interface 321 may be provided on the output unit 319.

In Fig. 4 an example string 400 of input characters is shown. The string 400 comprises the following input characters: "Lorem ipsum dolor sit amet, consectetur adipiscing elit. Nunc in erat sit amet ante volutpat efficitur a non erat. Maecenas mollis sem a tortor congue, eget bibdendum Tellus aliquam. Nulla eu eros lectus." In this example, all characters "." will be determined as having a probability value being greater that 0,5, such that the characters "." are marked or labelled as being end characters 401, which means that the characters "." may be associated with a split label of a particular value being different from a non end character. Thus, the labelling of the characters "." with a split label having a value corresponding to an end character leads to a text 403 that is split at every position of a character that has been labeled with a split label having a value corresponding to an end character. This text 403 reads as follows:
"Lorem ipsum dolor sit amet, consectetur adipiscing elit. Nunc in erat sit amet ante volutpat efficitur a non erat. Maecenas mollis sem a tortor congue, eget bibdendum Tellus aliquam.
Nulla eu eros lectus."

Thus, at every position of a character ".", and before every capital letter, a new line command 405 was set for segmentation of the text 403. However, it should be clear from the description that the logic for identification of particular end characters 401 is provided by a machine learning algorithm that has been trained on annotated data.

In the string 400 of input characters, a particular character 411 is marked, which splits a first segment 407 positioned left from the particular input character 411 from a second segment 409 positioned right from the particular input character 411. Preferably, a segment starts and ends with an end character.

It is to be further understood that, because some of the constituent system components and method steps depicted in the accompanying figures can be implemented in software, the actual connections between the systems components or the process steps may differ depending upon the manner in which the present method is programmed.
Given the teachings provided herein, one of ordinary skill in the related art will be able to contemplate these and similar implementations or configurations of the present method.

### Reference number list

- 100: first flow chart
- 101: first step
- 103: second step
- 105: third step
- 107: fourth step
- 109: fifth step
- 111: sixth step
- 113: seventh step
- 200: second flow chart
- 201: first input layer
- 203: second input layer
- 205: embedding layer
- 207: first artificial neural network
- 209: second artificial neural network
- 211: concatenating layer
- 213: dense layer
- 300: system
- 301: computer system
- 303: scanner
- 305: cloud server
- 307: central processor unit
- 309: non-transitory computer-readable media
- 311: receiving unit
- 313: extraction unit
- 315: determination unit
- 317: splitting unit
- 319: output unit
- 321: graphical user interface
- 323: control symbol
- 325: memory
- 400: string
- 401: end character
- 403: text
- 405: new line command
- 407: first segment
- 409: second segment
- 411: particular character

## Claims

1. A computer-implemented method for identification of segments in a string (400) of input characters using a computer system (301), the method comprising the following steps:
a) receiving (101) a string of input characters by a processor (307) of the computer system (301), and
by using the processor (307), for every character of the string (400) of input characters:
b) extract (103) a number of input characters left from a particular input character (411), and
extract a number of input characters right from the particular input character (411),
c) determine (105) a probability for the particular input character (411) being an end character (401) using at least one machine learning algorithm (207, 209), wherein the input characters left from the particular input character (411) and/or the input characters right from the particular input character (411) are used as input (201, 203) for the machine learning algorithm (207, 209),
d) split (107) the string (400) of input characters at a position of the particular input character (411) into segments (407, 409) if the probability determined by the at least one machine learning algorithm (207, 209) is greater than a predetermined threshold,
e) repeat (109) steps b) to d) for the remaining input characters,
f) generate (111) an output (403) comprising a segmentation on every position of the string (400) of input characters, which caused a splitting of the string (400) of input characters in step d).

2. The method according to claim 1,
wherein a first machine learning algorithm (207) is used for the input characters extracted left from the particular input character (411), and
wherein a second machine learning algorithm (209) is used for the input characters extracted right from the particular input character (411), and
wherein the output from the first and the second machine learning algorithms (207, 209) are concatenated into one prediction value indicative of the probability that the particular character of the string (400) of input characters is an end character (401) determined by the at least one machine learning algorithm.

3. The method according to claim 1 or 2,
the method further comprising:
g) carry out (113) an automatic text analysis algorithm based on the segments determined by splitting the string (400) of input characters based on the generated output.

4. The method according to claim 3, wherein the method further comprises:
generating a document comprising the text determined by the automatic text analysis algorithm, wherein the text is segmented according to the prediction value, and
displaying the generated document on an output unit (319).

5. The method according to claims 3 or 4, wherein the automatic text analysis algorithm is used to generate a medical report with a standardized tokenization.

6. The method according to any of the previous claims,
wherein the at least one machine learning algorithm (207, 209) is a pre-trained machine learning algorithm that has been trained using training data comprising:
a number of input characters and a number of ground truth labels, wherein each ground truth label is associated with a number of input characters, and each ground truth label indicates an association of the respective input characters with a given class representing a number indicative of a probability that the respective input characters are characters standing left or right from an end character.

7. The method according to any of the previous claims,
wherein the at least one machine learning algorithm (207, 209) comprises at least one artificial neural network (207, 209) .

8. The method according to claim 7,
wherein the at least one artificial neural network (207, 209) is a long short term memory artificial neural network.

9. The method according to any of the previous claims,
wherein the characters of the string (400) of characters are converted into at least one character embedding comprising a vector representing at least one of the characters in the multidimensional space.

10. The method according to any of the previous claims,
wherein an output from the at least one machine learning algorithm (207, 209) is converted into a single dimension using a dense function.

11. The method according to any of the previous claims,
wherein the method comprises obtaining the string (400) of characters via a graphical user interface (321), wherein the graphical user interface (321) comprises at least one control symbol (323) for carrying out a scan process for scanning hand written information and to convert the handwritten information into the string of characters.

12. A system (300) comprising a processor (307) and a memory (325), wherein the memory comprises a computer program comprising instructions, which when the program is executed by the processor, cause the processor to carry out the steps according to the method of any of claims 1 to 11.

13. The system (300) according to claim 12,
wherein the system further comprises:
a receiving unit (311) configured for receiving a string (400) of input characters in a step a),
an extraction unit (313) for extracting a number of input characters left from a particular input character (411), and for extracting a number of input characters right from the particular input character (411) in a step b),
a determination unit (315) for determining a probability for the particular input character (411) being an end character using at least one machine learning algorithm (207, 209), wherein the input characters left from the particular input character (401) and the input characters right from the particular input character are used as input for the machine learning algorithm in a step c),
a splitting unit (317) for splitting up the string (400) of input characters into segments (407, 409) at a position of the particular input character (411) if the probability determined by the at least one machine learning algorithm (207, 209) is greater than a predetermined threshold in a step d), wherein the system (300) is configured to repeat steps a) to d) for the remaining input characters,
and wherein the system (300) further comprises an output unit (319) for generating an output that is segmented on every position of the string (400) of input characters that caused a splitting of the string (400) of input characters in step d).

14. A computer readable medium (309) having instructions stored thereon which, when executed by a computer, cause the computer to perform the method according to any of claims 1 to 11.

## Amended claims

### Amended claims in accordance with Rule 137(2) EPC.

1. A computer-implemented method for identification of segments in a string (400) of input characters using a computer system (301), the method comprising the following steps:
a) receiving (101) a string of input characters by a processor (307) of the computer system (301), and
by using the processor (307), for every character of the string (400) of input characters:
b) extract (103) a number of input characters left from a particular input character (411), and
extract a number of input characters right from the particular input character (411),
c) determine (105) a probability for the particular input character (411) being an end character (401) using at least one machine learning algorithm (207, 209), wherein the input characters extracted left from the particular input character (411) and the input characters extracted right from the particular input character (411) are used as input (201, 203) for the machine learning algorithm (207, 209),
d) split (107) the string (400) of input characters at a position of the particular input character (411) into segments (407, 409) if the probability determined by the at least one machine learning algorithm (207, 209) is greater than a predetermined threshold,
) generate (111) an output (403) comprising a segmentation on every position of the string (400) of input characters, which caused a splitting of the string (400) of input characters in step d).

2. The method according to claim 1,
wherein a first machine learning algorithm (207) is used for the input characters extracted left from the particular input character (411), and
wherein a second machine learning algorithm (209) is used for the input characters extracted right from the particular input character (411), and
wherein the output from the first and the second machine learning algorithms (207, 209) are concatenated into one prediction value indicative of the probability that the particular character of the string (400) of input characters is an end character (401) determined by the at least one machine learning algorithm.

3. The method according to claim 1 or 2,
the method further comprising:
g) carry out (113) an automatic text analysis algorithm based on the segments determined by splitting the string (400) of input characters based on the generated output.

4. The method according to claim 3, wherein the method further comprises:
generating a document comprising the text determined by the automatic text analysis algorithm, wherein the text is segmented according to the prediction value, and
displaying the generated document on an output unit (319).

5. The method according to claims 3 or 4, wherein the automatic text analysis algorithm is used to generate a medical report with a standardized tokenization.

6. The method according to any of the previous claims,
wherein the at least one machine learning algorithm (207, 209) is a pre-trained machine learning algorithm that has been trained using training data comprising:
a number of input characters and a number of ground truth labels, wherein each ground truth label is associated with a number of input characters, and each ground truth label indicates an association of the respective input characters with a given class representing a number indicative of a probability that the respective input characters are characters standing left or right from an end character.

7. The method according to any of the previous claims,
wherein the at least one machine learning algorithm (207, 209) comprises at least one artificial neural network (207, 209).

8. The method according to claim 7,
wherein the at least one artificial neural network (207, 209) is a long short term memory artificial neural network.

9. The method according to any of the previous claims,
wherein the characters of the string (400) of characters are converted into at least one character embedding comprising a vector representing at least one of the characters in the multidimensional space.

10. The method according to any of the previous claims,
wherein an output from the at least one machine learning algorithm (207, 209) is converted into a single dimension using a dense function.

11. The method according to any of the previous claims,
wherein the method comprises obtaining the string (400) of characters via a graphical user interface (321), wherein the graphical user interface (321) comprises at least one control symbol (323) for carrying out a scan process for scanning hand written information and to convert the handwritten information into the string of characters.

12. A system (300) comprising a processor (307) and a memory (325), wherein the memory comprises a computer program comprising instructions, which when the program is executed by the processor, cause the processor to carry out the steps according to the method of any of claims 1 to 11.

13. The system (300) according to claim 12,
wherein the system further comprises:
a receiving unit (311) configured for receiving a string (400) of input characters in a step a),
an extraction unit (313) for extracting a number of input characters left from a particular input character (411), and
for extracting a number of input characters right from the particular input character (411) in a step b),
a determination unit (315) for determining a probability for the particular input character (411) being an end character using at least one machine learning algorithm (207, 209),
wherein the input characters extracted left from the particular input character (401) and the input characters extracted right from the particular input character are used as input for the machine learning algorithm in a step c),
a splitting unit (317) for splitting up the string (400) of input characters into segments (407, 409) at a position of the particular input character (411) if the probability determined by the at least one machine learning algorithm (207, 209) is greater than a predetermined threshold in a step d), and wherein the system (300) further comprises an output unit (319) for generating an output that is segmented on every position of the string (400) of input characters that caused a splitting of the string (400) of input characters in step d).

14. A computer readable medium (309) having instructions stored thereon which, when executed by a computer, cause the computer to perform the method according to any of claims 1 to 11.
